(19) **Europäisches Patentamt**
**European Patent Office**
**Office européen des brevets**

(11) **EP 2 117 825 B1**

(12) **EUROPEAN PATENT SPECIFICATION**

(45) Date of publication and mention
of the grant of the patent:
**04.05.2011 Bulletin 2011/18**

(51) Int Cl.:
**B32B 5/26** *(2006.01)* **B01D 39/16** *(2006.01)*
**D04H 1/58** *(2006.01)*

(21) Application number: **08709318.3**

(22) Date of filing: **08.02.2008**

(86) International application number:
**PCT/FI2008/050050**

(87) International publication number:
**WO 2008/096045 (14.08.2008 Gazette 2008/33)**

(54) **A MULTILAYER COMPOSITE NONWOVEN MATERIAL, A FLUID FILTER AND A METHOD OF MAKING THE NONWOVEN MATERIAL**

MEHRLAGIGER VERBUNDVLIESSTOFF, FLUIDFILTER UND VERFAHREN ZUR HERSTELLUNG DES VLIESSTOFFES

MATIÈRE NON TISSÉE COMPOSITE MULTICOUCHE, FILTRE DE FLUIDE ET PROCÉDÉ DE FABRICATION DE LA MATIÈRE NON TISSÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.02.2007 US 889202 P**

(43) Date of publication of application:
**18.11.2009 Bulletin 2009/47**

(73) Proprietor: **Polyester Fibers LLC**
**Miami, FL 33126 (US)**

(72) Inventors:
• **PEART, Christopher**
**Madisonville, KY 42431 (US)**

• **LEMASTER, Harley**
**Florence, South Carolina 29505 (US)**
• **DUELLO, Leonard**
**Hewitt, Texas TX 76643 (US)**
• **LEMASTER, David**
**Florence, South Carolina 29505 (US)**

(74) Representative: **Hovi, Simo Pekka Tapani**
**Coor Service Management**
**Karhula Oy**
**Intellectual Property Deparment**
**Antintie 7**
**48601 Kotka (FI)**

(56) References cited:
**JP-A- 56 124 413      JP-A- 2004 243 250**
**US-A- 4 702 940      US-A- 4 731 135**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The present disclosure relates generally to a method of manufacture of a multilayer, composite nonwoven. It is more particularly concerned with a method for a new and improved multilayer, composite nonwoven material having advantageous properties for use as air filtration media.

### Background

It is known to make filtration media from multi-layer non-woven materials. U.S. Patent No. 6,315,805 describes a dual or multi-layer filter medium for air filtration in which at least one meltblown layer having a larger pore size than that of the next following layer or layers is placed on the inlet side of the filter medium. The fibers of the meltblown layer have a diameter of over 10 $\mu$m and the pore size of the meltblown layer is more than 100 $\mu$m. A multi-layer dust removal filter is described in U.S. Patent No. 6,966,939 in which a coarse dust filtration layer, a fine dust filtration layer and a support layer are separately manufactured and are disposed behind one another in the direction from the inflow side to the outflow side. U.S. Patent No. 6,669,761 discloses a multi-layer air filter including a filter layer which is covered by a prefilter layer on the dust-laden gas side which has a laid dry electrostatically effective non-woven fabric whose area weight is 10 through 100 g/m$^2$.

Additives such as resin binders, colorants and antimicrobials are commonly applied to dry laid and wet laid fibrous nonwoven webs. The additives are applied using methods that uniformly saturate the web, for example dipping the web in a liquid additive and squeezing the excess additive off. Such uniform applications enhance web strength and deliver functional chemicals such as colorants, antimicrobials and coatings uniformly throughout the thickness of the nonwoven web. This uniform and homogeneous application of additives throughout the extent of a nonwoven web can be a disadvantage in some applications. For example, in filtration a sided (nonuniform or gradient) additive application is advantageous as it provides fibers on one side of the nonwoven web with less resin binder than fibers on the opposing side of the nonwoven web. The side of the nonwoven web with less resin binder has more open space allowing more dirt to build up before reaching a pre-determined pressure end point. The side of the web with more resin binder is stiffer and can be folded or pleated more readily. A sided additive application is also advantageous as it lessens the amount of resin used and provides a cost advantage as compared to using a homogeneous distribution of resin binder throughout the web.

Presently, a sided application of additives requires complicated control of additive sprays with a spray being applied to one side containing resin binder and a functional additive such as a water repellent being applied to the opposing side by another spray. Other options to provide a sided application of additives include multiple step operations which may include kiss coating on alternative sides or spraying on one side and kiss coating the other side. Thus, a sided application of additives such as resin binder requires complicated, multiple step processes that are difficult to control and expensive.

It would be useful to develop a filter having effectively filtration capacity and which is relatively simple and economical to produce.

### Summary

One aspect of the disclosure is a method of making a multilayer, composite nonwoven material comprising providing a first plurality of staple length fibers having an average denier in the range of about 2.0 to about 6.5; forming the first plurality of fibers into a first nonwoven web; providing a second plurality of staple length fibers having an average denier in the range of about 0.9 to about 4.5; forming the second plurality of fibers into a second nonwoven web; overlying the first and second webs; applying resin to the overlying webs; and drying the resin to bind the fibers of the first and second webs and form the multilayer, composite nonwoven material so that the nonwoven material has a resin placement factor of about 1.1 to about 10.

A further aspect of the disclosure provides a method to manufacture a multilayer, composite nonwoven material. In this aspect a first card machine is used to form a first batt. A second card machine is used to form a second batt. The batts are overlaid and bonded to form a multilayer, composite nonwoven material.

Yet another aspect of the disclosure provides a method for applying a sided application of an additive to a multilayer, composite nonwoven material, comprising applying the additive in liquid form in a single operation to overlaid nonwoven batts, wherein the fiber composition of each batt is chosen to provide a predetermined resin retention for the batt, and drying the batts.

A further aspect of the disclosure is a method of applying a sided application of a binder resin to a multilayer, composite nonwoven material comprising predetermining a resin placement factor for the multilayer, composite nonwoven material; providing a first plurality of staple fibers having an average denier in the range of about 2.0 to about 6.5 and a second plurality of staple fibers having an average denier in the range of about 0.9 to about 4.5, wherein the denier of the first plurality of fibers and the denier of the second plurality of fibers is chosen to achieve the predetermined resin placement factor when the multilayer, composite nonwoven material is formed from a first web comprising the first plurality of fibers and a second web comprising the second plurality of fibers; forming the first plurality of fibers into a first nonwoven web; forming the second plurality of fibers into a second nonwoven web; overlying the first and second webs; applying resin to the overlying webs; and drying the resin to bind the fibers of the first and second webs and form the multilayer, composite nonwoven material.

In general, unless otherwise explicitly stated, the disclosed materials and processes may be alternately formulated to comprise, consist of, or consist essentially of, any appropriate components, moieties or steps herein disclosed. The disclosed materials and processes may additionally, or alternatively, be formulated so as to be devoid, or substantially free, of any components, materials, ingredients, adjuvants, moieties, species and steps used in the prior art compositions or that are otherwise not necessary to the achievement of the function and/or objective of the present disclosure.

When the word "about" is used herein it is meant that the amount or condition it modifies can vary some beyond the stated amount so long as the function and/or objective of the disclosure are realized. The skilled artisan understands that there is seldom time to fully explore the extent of any area and expects that the disclosed result might extend, at least somewhat, beyond one or more of the disclosed limits. Later, having the benefit of this disclosure and understanding the concept and embodiments disclosed herein, a person of ordinary skill can, without inventive effort, explore beyond the disclosed limits and, when embodiments are found to be without any unexpected characteristics, those embodiments are within the meaning of the term about as used herein.

**Definitions:**

Bicomponent fiber - A fiber that has been formed by extruding polymer sources from separate extruders and spun together to form a single fiber. Typically, two separate polymers are extruded, although a bicomponent fiber may encompass extrusion of the same polymeric material from separate extruders. The extruded polymers are arranged in substantially constantly positioned distinct zones across the cross-section of the bicomponent fibers and extend substantially continuously along the length of the bicomponent fibers. The configuration of bicomponent fibers can be symmetric (e.g., sheath:core or side:side) or they can be asymmetric (e.g., offset core within sheath; crescent moon configuration within a fiber having an overall round shape). The two polymer sources may be present in ratios of, for example (but not exclusively), 75/25, 50/50 or 25/75.

Biconstituent fiber - A fiber that has been formed from a mixture of two or more polymers extruded from the same spinneret. Biconstituent fibers do not have the various polymer components arranged in relatively constantly positioned distinct zones across the cross-sectional area of the fiber and the various polymers are usually not continuous along the entire length of the fiber, instead usually forming fibrils which start and end at random. Biconstituent fibers are sometimes also referred to as multiconstituent fibers.

Binder - An adhesive material used to bind a web of fibers together or bond one web to another. The principal properties of a binder are adhesion and cohesion. The binder can be in solid form, for example a powder, film or fiber, in liquid form, for example a solution, dispersion or emulsion or in foam form.

Card - A machine designed to separate fibers from impurities, to align the fibers and deliver the aligned fibers as a batt or web. The fibers in the web can be aligned randomly or parallel with each other predominantly in the machine direction. The card consists of a series of rolls and drums that are covered with a plurality of projecting wires or metal teeth.

Carded web - A nonwoven web of fibers produced by carding.

Carding - A process for making nonwoven webs on a card.

Cellulose fiber - A fiber comprised substantially of cellulose. Cellulosic fibers come from manmade sources (for example, regenerated cellulose fibers or lyocell fibers) or natural sources such as cellulose fibers or cellulose pulp from woody and non-woody plants. Woody plants include, for example, deciduous and coniferous trees. Non-woody plants include, for example, cotton, flax, esparto grass, kenaf, sisal, abaca, milkweed, straw, jute, hemp, and bagasse.

Cellulose material - A material comprised substantially of cellulose. The material may be a fiber or a film. Cellulosic materials come from manmade sources (for example, regenerated cellulose films and fibers) or natural sources such as fibers or pulp from woody and non-woody plants.

Conjugate fiber - Fiber that has been formed by extruding polymer sources from separate extruders and spun together to form a single fiber. A conjugate fiber encompasses the use of two or more separate polymers each supplied by a separate extruder. The extruded polymers are arranged in substantially constantly positioned distinct zones across the cross-section of the conjugate fiber and extend substantially continuously along the length of the conjugate fiber. The shape of the conjugate fiber can be any shape that is convenient to the producer for the intended end use, e.g., round, trilobal, triangular, dog-boned, flat or hollow.

Cross machine direction (CD) - The direction perpendicular to the machine direction.

Denier - A unit used to indicate the fineness of a filament given by the weight in grams for 9,000 meters of filament. A filament of 1 denier has a mass of 1 gram for 9,000 meters of length.

Fiber - A material form characterized by an extremely high ratio of length to diameter. As used herein, the terms fiber and filament are used interchangeably unless otherwise specifically indicated.

Fiber weight - basis weight or grams of fiber without the binder.

Filament - A substantially continuous fiber. As used herein, the terms fiber and filament are used interchangeably unless otherwise specifically indicated.

Foam bonding - A method of applying a binder in a foam form to a fibrous web. The foam form contains less fluid than the same material in a liquid form and thus requires less energy and time to dry the foam and cure the binder.

Frazier - The rate of air flow through a material under a differential pressure between the two fabric surfaces. The rate is measured generally in accordance with ASTM D737-75. Units are cubic feet per square foot of sample per minute (1 cf/sqf/min = 5.08 l/m$^2$/s and the differential pressure is 0.5" water gauge (WG) (124.5 Pascal).

Lyocell - Manmade cellulose material obtained by the direct dissolution of cellulose in an organic solvent without the formation of an intermediate compound and subsequent extrusion of the solution of cellulose and organic solvent into a coagulating bath.

Machine direction (MD) - The direction of travel of the forming surface onto which fibers are deposited during formation of a nonwoven web material.

Meltblown fiber - A fiber formed by extruding a molten thermoplastic material as filaments from a plurality of fine, usually circular, die capillaries into a high velocity gas (e.g., air) stream which attenuates the filaments of molten thermoplastic material to reduce their diameter. Thereafter, the meltblown fibers are carried by the high velocity gas stream and are deposited on a collecting surface to form a web of randomly dispersed meltblown fibers. The meltblown process includes the meltspray process.

MERV - Acronym for Minimum Efficiency Reporting Value - obtained from full ASHRAE 52.2 1999 test report. The number is obtained by comparison of test data to a tabulation of possible efficiency values. A MERV6 is a value for a filter in which the average minimum efficiency for the test composite for 3 to 10 micron insult particles is above 35%, a MERV7 is a value for a filter in which the average minimum efficiency for the test composite for 3 to 10 micron insult particles is above 50% and A MERV8 is a value for a filter in which the average minimum efficiency for the test composite for 3 to 10 micron insult particles is above 70%, among other requirements. "Estimated MERV" is determined from initial flatsheet performance as an extrapolation of the data referencing equality with a full test.

Non-thermoplastic polymer - Any polymer material that does not fall within the definition of thermoplastic polymer.

Nonwoven fabric, sheet or web - A material having a structure of individual fibers which are interlaid, but not in an identifiable manner as in a woven or knitted fabric. Nonwoven materials have been formed from many processes such as, for example, meltblowing, spin laying, carding, air laying and water laying processes. The basis weight of nonwoven materials is usually expressed in weight per unit area, for example in grams per square meter (gsm) or ounces per square foot (osf) (1 osf = 305 gsm) or ounces per square yard (osy) (1 osy = 33,94 gsm). As used herein a nonwoven sheet includes a wetlaid paper sheet.

Particle filtration efficiency (PFE) - fraction of the potassium chloride particles removed during an ASHRAE 52.2 test of a filter/media calculated as: PFE = [1 - (concentration of the insult particles downstream of the media/filter divided by the concentration of the insult particles upstream of the media/filter)] X 100.

Polymer - A long chain of repeating, organic structural units. Generally includes, for example, homopolymers, copolymers, such as for example, block, graft, random and alternating copolymers, terpolymers, etc, and blends and modifications thereof. Furthermore, unless otherwise specifically limited, the term "polymer" includes all possible geometrical configurations. These configurations include, for example, isotactic, syndiotactic and random symmetries.

Regenerated cellulose - Manmade cellulose obtained by chemical treatment of natural cellulose to form a soluble chemical derivative or intermediate compound and subsequent decomposition of the derivative to regenerate the cellulose. Regenerated cellulose includes spun rayon and cellophane film. Regenerated cellulose processes include the viscose process, the cuprammonium process and saponification of cellulose acetate.

Resin placement factor (RPF) - ratio of extracted resin percentage of the lower denier fiber layer divided by the extracted resin percentage of higher denier fiber layer.

Spunlaid filament - A filament formed by extruding molten thermoplastic materials from a plurality of fine, usually circular, capillaries of a spinneret. The diameter of the extruded filaments is then rapidly reduced as by, for example, eductive drawing and/or other well-known spunbonding mechanisms. Spunlaid fibers are generally continuous with deniers within the range of about 0.1 to 5 or more.

Spunbond nonwoven web - Webs formed (usually) in a single process by extruding at least one molten thermoplastic material as filaments from a plurality of fine, usually circular, capillaries of a spinneret. The filaments are partly quenched and then drawn out to reduce fiber denier and increase molecular orientation within the fiber. The filaments are generally continuous and not tacky when they are deposited onto a collecting surface as a fibrous batt. The spunlaid fibrous batt is then bonded by, for example, thermal bonding, calendaring, chemical binders, mechanical needling, hydraulic entanglement or combinations thereof, to produce a nonwoven fabric.

Staple fiber - A fiber that has been formed at, or cut to, staple lengths of generally one quarter to eight inches (0.6 to 20 cm).

Synthetic fiber - a fiber comprised of manmade material, for example glass, polymer, combination of polymers, metal, carbon, regenerated cellulose or lyocell.

Substantially continuous - in reference to the polymeric filaments of a nonwoven web, it is meant that a majority of the filaments or fibers formed by extrusion through orifices remain as continuous nonbroken filaments as they are drawn and then impacted on a collection device. Some filaments may be broken during the attenuation or drawing process, with a substantial majority of the filaments remaining continuous.

Tex - A unit used to indicate the fineness of a filament given by the weight in grams for 1,000 meters of filament. A filament of 1 tex has a mass of 1 gram for 1,000 meters of length.

Thermoplastic polymer - A polymer that is fusible, softening when exposed to heat and returning generally to its unsoftened state when cooled to room temperature. Thermoplastic materials include, for example, polyvinyl chlorides, some polyesters, polyamides, polyfluorocarbons, polyolefins, some polyurethanes, polystyrenes, polyvinyl alcohol, copolymers of ethylene and at least one vinyl monomer (e.g., poly (ethylene vinyl acetates), and acrylic resins.

**Brief Description of the Drawings:**

Referring now to the drawings wherein like elements are numbered alike in the several Figures:

FIG. 1 is a graph of fiber denier for the high average fiber denier layer versus average resin placement factor for Samples 4-9.

FIG. 2 is a graph of average fiber denier for the small fiber denier layer versus average resin placement factor for Samples 4-27.

FIG. 3 is a graph of average fiber denier for the large fiber denier layer versus average resin placement factor for Samples 4-27.

**Detailed Description**

One aspect of this disclosure is method for manufacturing a multilayer, composite nonwoven material. The composite nonwoven material can comprise two or more layers, with each layer comprising a nonwoven web. The webs comprising each layer are overlaid and bonded together to produce the multilayer, composite nonwoven material. In some advantageous embodiments the composite nonwoven material comprises two layers, with each layer comprising a carded, nonwoven web.

As used herein, the term "resin binder content" refers to the quantity of dried resin binder per unit fiber weight. Thus, when a first nonwoven layer has a higher "resin binder content" than a second nonwoven layer, the first layer contains a greater weight of dried resin per unit fiber weight than the second layer.

Fibers of different average denier usually have different rates of binder pick-up. The difference in average denier of the fibers in the first and second layers results in different quantities of resin per unit weight of fiber being incorporated into the different layers, thereby resulting in a sided application of resin without the use of spray equipment.

The web is particularly useful in making a filter for a fluid such as a gas or liquid, and is well suited for making a filter for a gas such as air. For simplicity, reference will be made to a multilayer, composite nonwoven material having only two layers and used for air filtration media. However, it also should be understood that this disclosure encompasses composite nonwoven materials having more than two layers and used in applications other than fluid filter media.

The fiber denier or fiber diameter is independently chosen for each layer of the multilayer, composite nonwoven material. The chosen fiber denier for the multilayer, composite nonwoven material will be in the range of about 0.1 to about 45 advantageously in the range of about 0.9 to about 10 and typically in the range of about 1 to about 6. More advantageously the multilayer, composite nonwoven material will comprise layers having different or gradient average fiber deniers. In some cases, the average fiber denier of one layer is at least 10% greater than the average fiber denier of the other layer. In one embodiment the lower average fiber denier layer can comprise fibers having a denier in the range of about 0.9 to about 4.5 and the higher average fiber denier layer can comprise fibers having a denier in the range of about 2.0 to about 6.5. With reference to an air filter media, air being filtered will enter one side (layer) of the media and exit the opposing side (layer) of the media. The air entry layer will use fibers having a higher average denier and the air exit layer will use fibers having a lower average denier.

Typically synthetic staple fibers are used to form each layer of the multilayer, composite nonwoven material. Non-limiting examples of suitable fibers include polyesters. One type of polyester is polyethylene terephthalate. The synthetic fibers used to form each layer can be polymer fibers and may include at least some bicomponent and/or biconstituent fibers. Staple length cellulosic fibers can also be used, either alone or in combination with synthetic fibers. In some embodiments nonwoven webs formed from meltblown fibers or substantially continuous spunlaid filaments can be used as one or more of the layers in the multilayer, composite nonwoven material. In some cases, polyester fibers, or a combination of polyester fibers and polypropylene fibers, are used to form each web. Polypropylene fibers alone are not used unless they are employed with a resin that allows for control over its placement due to fiber separation.

Non-limiting, specific examples of suitable synthetic polymer fibers are listed below.

**Table 1**

| Denier | Length | Polymer | Brand Name/Supplier |
|---|---|---|---|
| 1.5 | 1.5"/ 3,8 mm | polyester | Nan Ya |
| 2.25 | 1.5"/ 3.8 mm | polyester | Nan Ya |
| 3 | 2" / 5,1 mm | polyester | Color-Fi |
| 4 | 2" / 5,1 mm | polyester | Color-Fi |
| 3 | 2" / 5,1 mm | polypropylene | American Synthetics |
| 6 | 2" / 5,1 mm | polyester | DAK Fibers |
| 6 | 2" / 5,1 mm | polypropylene | Filter Specialist Incorporated |

The multilayer, composite nonwoven material can be manufactured using a card with a separate fiber feed to prepare each nonwoven web layer. Since each card has its own fiber feed the fiber composition and denier of the nonwoven web produced by that card can be different than the fiber compositions and deniers of the nonwoven webs produced by the other cards. This allows the fiber composition and denier of each nonwoven web (layer) in the multilayer, composite nonwoven material to be individually selected. Other methods of preparing a nonwoven web that allow individual selection of fiber composition and denier for each nonwoven web (layer) may also be used, including but not limited to air-laying and liquid-laying. Foam-laying can be used as long as minimal foam residue is left that effects resin placement and/or distribution. The nonwoven webs are overlaid.

The fibers within the overlaid webs are bonded and the overlaid webs are bonded. This can be accomplished by overlaying and then bonding within a particular web as well as between different webs. Bonding can be accomplished in any known fashion, for example using low melting binder fibers as part of the web and permeating the web with binder resin solutions. Advantageously, a liquid solution comprising a binder resin is applied to the overlaid webs. In one embodiment the liquid binder resin solution is applied in foam form to the overlaid webs. Other known methods of applying the liquid binder resin to the overlaid webs, for example spray application or dip application, may also be used. The binder resin permeates the overlaid webs. In many cases, the resin permeated overlaid webs are heated to remove fluid and cure the binder resin. After curing the multilayer, composite nonwoven material is accumulated.

Non-limiting examples of suitable binders are polyvinyl acetate, acrylics, acrylates, and polyvinyl chlorides. In some cases the binder is crosslinked. Crosslinking can take place as part of the drying process, and in some cases is initiated by heat, UV radiation, or another suitable technique. Particular examples of binder formulations suitable for use in this disclosure are listed below.

**Table 2**

| Binder Formulation A | | |
|---|---|---|
| Chemical Type | Brand Name | Amount |
| Polyvinyl Acetate | Omnova RW-41-ND | 100 Gals / 400 dry lbs (379 l/180 kg) |
| Butyl Acrylate | Spartan Chemicals Sparcryl 102 | 9 Gals / 51 dry lbs (34 l / 23 kg) |
| Nonyl Phenoxy Polyethylene Oxide | Spartan Chemicals NP-9 | 1 Gal (3,8 l) |
| Water | N/A | 220 Gals (830 l) |
| | | |

(continued)

| Binder Formulation B | | |
|---|---|---|
| Chemical Type | Brand Name | Amount |
| Polyvinyl Acetate | Omnova RW-41-ND | 250 Gals / 1001 dry lbs (950 l / 450 kg) |
| Nonyl Phenoxy Polyethylene Oxide | Spartan Chemicals NP-9 | 1 Gal (3,8 l) |
| Ammonium Chloride | Brenntag Ammonium Chloride | 2 lbs (0,9 kg) |
| Water | Water | 90 Gals (340 l) |

Many different techniques can be used to quantitatively analyze resin adhesive levels in nonwoven webs depending upon their chemical composition, cure and additives. Some of these techniques involve the use of aqueous solutions to dissolve the binder/resin from the specimen. One specific technique is described in the Omnova technical bulletin for Omnova RW-41. Summarizing this technique, an aqueous solution of 70% sulfuric acid and 30% water, by volume, is prepared. Also, an aqueous 5% sodium bicarbonate solution and 95% water (weight/volume) is prepared. Three samples of a dual layered nonwoven are delaminated with peeling/pulling into two layers to provide six test specimens. Each test specimen is weighed and the weight noted. (These weights are the A weights). Each test specimen is soaked in the sulfuric acid solution for 20 minutes at 38°F (3,3°C) with stirring every two minutes. Each extracted sample is removed from the sulfuric acid solution, drained and soaked in the sodium bicarbonate solution for five minutes. Each extracted sample is dried and weighed (These weights are the B weights).

Specimen Binder percentage is (A weight - B weight) / (A weight) multiplied by 100.

This procedure is completed for each of the six test specimens. The results are averaged to provide for the resin additive levels in each layer. The average resin additive level for the lower average denier fiber containing layer (air exit layer) is divided by the average resin additive level for the higher average denier fiber containing layer (air entry layer). This result is called the resin placement factor. The resin placement factor typically is in the range of 1 to 10, usually is 1.1 to 10, and in some cases is 1.5 to 6.0.

The following examples are included for purposes of illustration so that the disclosure may be more readily understood and are in no way intended to limit the scope of the disclosure unless otherwise specifically indicated.

**Multilayer, Composite Nonwoven Material**

Unless otherwise indicated all multilayer samples were manufactured using two cards with separate fiber feeds to prepare two nonwoven webs of different fiber compositions. The nonwoven webs were overlaid and have resin applied between a filled rubber roll and grooved steel roll which are positioned side-by-side providing for a horizontal nip which can be filled with foam resin as opposed to the rolls being vertically stacked with one roll above the other. A liquid binder resin was applied in foam form to the overlaid webs at the horizontal entry nip. The binder resin permeated, overlaid webs were heated on a series of steam cans and an oven to remove water and cure the resin. After curing the multilayer, composite nonwoven material was accumulated.

Table 3 illustrates test data for 24" by 24" by 2" (610 mm * 610 mm * 51 mm) filters with 26 pleats made from the multilayer, composite nonwoven material of Sample 1 and the single layer material of Samples 2 and 3. The data in Table 1 was generated from the ASHRAE 52.2 test method at a certified test laboratory. The test flow rate was 1968 cubic feet per minute (cfm) (929 l/s) and filters were tested to a final pressure drop off of 1.5" of water (386 Pa). The binder used in Samples 1-3 was binder Formulation A.

Sample 1 is a dual layer, composite nonwoven material. The air entry layer comprises 33% (percentage based on the entire two-layer sample) 3 denier by 2" (51 mm) polyester fibers and 33% 6 denier by 2" (51 mm) polyester fibers. The air entry layer has an average denier of 4.5 and a fiber weight of about 1.6 ounces per square yard (osy) (54 g/m$^2$). The air exit layer comprises 34% 2.25 denier by 1.5" (38 mm) polyester fibers and has a fiber weight of about 0.8 osy (27 g/m$^2$). The dual layer, composite nonwoven material of Sample 1 has a fiber weight of 2.6 osy (88 g/m$^2$), a resin content of 15% and an overall basis weight, including cured resin, of 3 osy (102 g/m$^2$).

Sample 2 is a single layer media consisting of an intimate blend of 50% 3 denier by 2" (51 mm) polyester fiber and 50% 2.25 denier by 1.5" (38 mm) polyester fiber. Sample 2 was made in a single card. Sample 2 had a fiber weight of 2.6 osy (88 g/m$^2$), a resin content of 15% and an overall basis weight, including cured resin, of 3 osy (102 g/m$^2$). Samples 1 and 2 were co-pleated with a wire mesh (wire-backed).

Sample 2 (single layer) clearly has a lower average fiber denier/diameter than Sample 1 (gradient multilayer). Surprisingly, Sample 2 has a lower average filter efficiency according to ASHRAE 52.2 (E3) than Sample 1. This is surprising because media with a larger average fiber denier is not expected to have a higher efficiency than media with a smaller fiber size denier due to the lower surface area of the larger fibers. Sample 2 also has a lower dust holding capacity according to ASHRAE 52.1 (DHC) than Sample 1. This is surprising because Sample 2 has a lower pressure drop than Sample 1. The DHC test adds ASHRAE dirt to a filter to a pressure drop end point. Starting at a lower pressure drop should allow for more dirt to be added before the endpoint of the test. Higher efficiency media usually is believed to have a higher pressure drop so it would normally have a lower DHC.

Sample 3 is a single layer non-wirebacked media consisting of an intimate blend of 33% 3 denier by 2" (51 mm) polyester fibers, 34% 6 denier by 2" (51 mm) polyester fibers and 33% 2.25 denier by 1.5" (38 mm) polyester fibers. Sample 3 was made in a single card. Sample 3 had a fiber weight of 2.6 osy (88 g/m$^2$), a resin content of 35% and an overall basis weight, including cured resin, of 4 osy (136 g/m$^2$).

The total fiber weight in both of samples 1 and 3 is 2.6 osy (88 g/m$^2$). Despite Samples 1 and 3 having both an equivalent fiber content and an equivalent fiber composition to one another, Sample 1, the gradient multilayer, composite nonwoven material, had a surprisingly higher efficiency (77.35%) than single layer Sample 3 (55.10%). Sample 1, the gradient multilayer, composite nonwoven material, also had a surprisingly higher DHC (161.05) than Sample 3 (155.50). This is surprising because Sample 3 is lighter in weight than Sample 1 and usually the higher fiber weight holds more dust.

**Control of Resin Placement Factor**

The following samples were prepared using the method discussed for Samples 1 to 3. While a variety of fiber blends are possible, specific fiber blends were prepared to illustrate control of the resin placement factor.

Sample 4 is a two layer, composite nonwoven material. Each layer comprises 100% 2.25 denier polyester fibers and binder formulation A. One layer had a fiber weight of about 0.8 osy (27 g/m$^2$), and the other layer had a fiber weight of about 1.6 osy (54 g/m$^2$). Testing reveals that one layer yielded 10.3% resin binder and the other layer yielded 10.1% resin binder. The calculated resin placement factor was 1.02. This would indicate a homogeneous distribution of resin binder with each layer having almost equivalent amounts of the resin binder. The basis weight, thickness, Frazier and MD Gurley values are shown on Table 4 and additional data is shown on Table 5.

Sample 5 is manufactured using binder formulation A similarly to Sample 4 except one layer of the web comprises 100% 2.25 denier polyester and the other layer comprises 100% 3 denier polyester fiber. The 2.25 denier layer has a fiber weight of about 0.8 osy (27 g/m$^2$) and the 3 denier layer has a fiber weight of about 1.6 osy (54 g/m$^2$). The layer containing 2.25 denier polyester fibers yielded 14.2% resin binder and the layer containing 3 denier polyester fibers yielded 6.9% resin binder. The calculated resin placement factor was 2.07. The multilayer, composite nonwoven material of Sample 5 had a sided distribution of resin binder. The resin placement factor shows that the 3 denier fiber layer controls placement of the resin binder in the multilayer, composite nonwoven material by accepting less of the resin binder than the 2.25 denier layer.

Sample 6 is manufactured using binder formulation A similarly to Sample 4 except one layer of the web comprises 100% 2.25 denier polyester and one layer comprises 100% 6 denier polyester fiber. The 2.25 denier layer has a fiber weight of about 0.9 osy (31 g/m$^2$) and the 6 denier layer has a fiber weight of about 1.8 osy (61 g/m$^2$). The layer containing 2.25 denier polyester fibers yielded 21.2% resin binder and the layer containing 6 denier polyester fibers yielded 5.2% resin binder. The calculated resin placement factor was 4.08. The multilayer, composite nonwoven material of Sample 6 had a sided distribution of resin binder. The resin placement factor shows that the 6 denier fiber layer controls placement of the resin binder in the multilayer, composite nonwoven material by accepting less of the resin binder than the 2.25 denier layer.

Sample 7 is manufactured using binder formulation A similarly to Sample 4 except one layer of the web comprises 100% 2.25 denier polyester and the other layer comprises a blend of 50% 3 denier polyester fiber and 50% 6 denier polyester fiber except the target weight is approximately 20% lower. The average denier of the blended layer is 4.5. The 2.25 denier layer has a fiber weight of about 0.7 osy (24 g/m$^2$) and the blended 3 denier and 6 denier layer has a fiber weight of about 1.4 osy (48 g/m$^2$). The layer containing 2.25 denier polyester fibers yielded 26.6% resin binder and the layer containing 3 and 6 denier polyester fibers yielded 8.1 % resin binder. The calculated resin placement factor was 3.28. The multilayer, composite nonwoven material of Sample 7 had a sided distribution of resin binder. The resin placement factor shows that the 3 and 6 denier fiber layer (average fiber denier 4.5) controls placement of the resin binder in the multilayer, composite nonwoven material by accepting less of the resin binder than the 2.25 denier layer.

Sample 8 is manufactured using binder formulation A similarly to Sample 4 except one layer of the web comprises 100% 2.25 denier polyester and the other layer comprises a blend of 50% 3 denier polyester fiber and 50% 6 denier polyester fiber (average fiber denier 4.5). The 2.25 denier layer has a fiber weight of about 0.8 osy (27 g/m$^2$) and the blended 3 denier and 6 denier layer has a fiber weight of about 1.6 osy (54 g/m$^2$). The layer containing 2.25 denier polyester fibers yielded 28.1% resin binder and the layer containing 3 and 6 denier polyester fibers yielded 6.2% resin binder. The calculated resin placement factor was 4.53. The multilayer, composite nonwoven material of Sample 8 had a sided distribution of resin binder. The resin placement factor shows that the 3 and 6 denier fiber layer (average fiber denier 4.5) controls placement of the resin binder in the multilayer, composite nonwoven material by accepting less of the resin binder than the 2.25 denier layer.

Sample 9 is manufactured similarly to Sample 4 except one layer of the web comprises 100% 1.5 denier polyester fibers and the other layer comprises 100% 4 denier polyester fibers and Sample 9 used binder formulation B. The 1.5 denier layer has a fiber weight of about 0.9 osy (31 g/m$^2$) and the 4 denier layer has a fiber weight of about 1.8 osy (61 g/m$^2$). The layer containing 1.5 denier polyester fibers yielded 48.4% resin binder and the layer containing 4 denier polyester fibers yielded 23.3% resin binder. The calculated resin placement factor was 2.08. The multilayer, composite nonwoven material of Sample 9 had a sided distribution of resin binder. The resin placement factor shows that the 4 denier fiber layer controls placement of the resin binder in the multilayer, composite nonwoven material by accepting less of the resin binder than the 1.5 denier layer.

In each of Samples 4 to 8, binder formulation A was applied in foam form at the same point of manufacture. Sample 9 used the same manufacturing process with binder formulation B. In each of Samples 4 to 9 the resin binder is applied to the overlaid webs and penetrates the webs as they pass through the closed nip formed by the grooved roll and the rubber roll. Despite using the same resin binder formulation and the same resin binder application process the material of Sample 4 had binder resin surprisingly uniformly throughout the material while the remaining samples had sided resin binder applications. Data for Samples 4-6 is shown on Table 6 and 7 below.

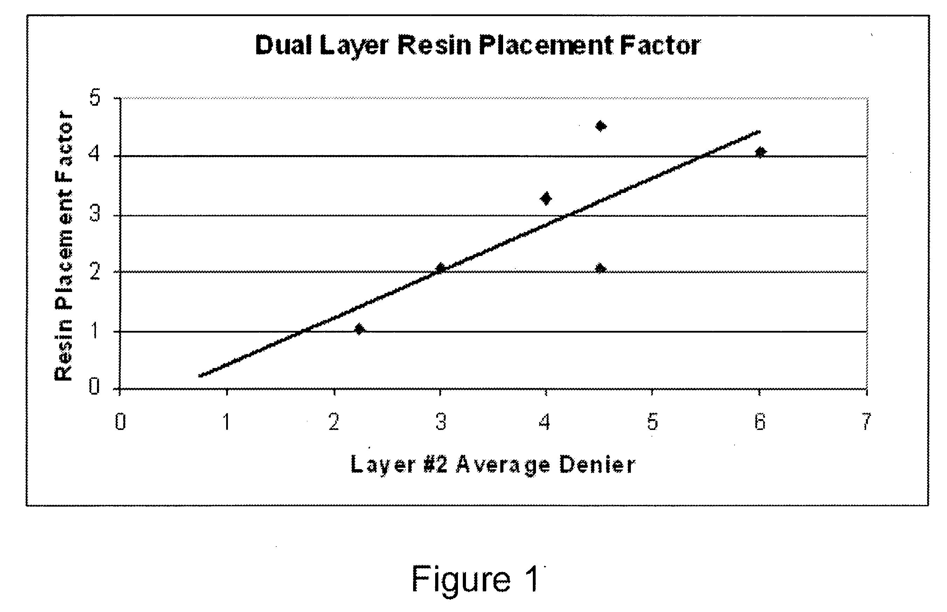

Figure 1 graphically illustrates the relationship between fiber denier of the high average denier layer and resin placement factor for Samples 4 to 9. A linear regression analysis between the fiber denier of the high average denier layer (X axis) and the resin placement factor (Y axis) indicates that "R$^2$" is 0.77. "R$^2$" results over 0.6 statistically indicate that changes in the fiber denier of the high average denier layer cause corresponding and predictable changes in the resin placement factor. Thus, selection of fiber denier in the layers of a multilayer, composite nonwoven material can be used to control the resin placement factor and thereby control placement of the resin binder in that multilayer, composite nonwoven material.

Samples 10-27 were prepared with resin placement factors in the range of 1.50 to 5.77. Sample 10-24 use fibers of polyester and Samples 25-27 use blends of polyester and polypropylene fibers. The denier of the fiber or fibers on the air exit side is indicated in Col. 2 of Table 4, and the denier of the fiber or fibers on the air entrance side is provided in Col. 4 of Table 4. Average denier values are shown in cols. 3 and 5 of Table 4. Other data shown in Table 4 includes Binder Formulation (A or B) Machine Set-up, and "Gap setting" vs. "Squeezed" for removal of excess binder. Table 5 shows the fiber weight of the air exit layer and air entrance layer, the amount of extractables in the air exit layer and air entrance layer, and the resin placement factor. Table 6 shows basis weight, thickness, and Frazier for the Samples and MD Gurley for some of the Samples. Average values for each set of samples are reported on the Table. Lower Frazier values mean that the media is more closed off and normally more efficient. Higher MD Gurley values present those media that are more likely to be commercially useful for wireless media, more typically those over 500 in the tests presented.

Table 7 shows basis weight, thickness, and Frazier for particular specimens within the sets of samples, along with dP, particle filtration efficiency and Estimated MERV values. Various examples would be preferable depending upon a particular filter end use and production costs. Estimated MERV demonstrates what the expected efficiency would be of a filter manufactured by a purchaser of the nonwoven material upon completion of a full ASHRAE 52.2 test. Higher MERV numbers at lower pressure drops make the media more valuable. All of the samples had a particle filtration efficiency of at least 46% except for Sample 20. The greatest efficiency was achieved with Samples 11 and 14-17.

Sample 20 illustrates the effect of low basis weight on efficiency showing a significant reduction in the 3-10 micron PFE value from above 46% to approximately 31 %.

In Table 6, Machine Direction (MD) Gurley stiffness was measured according to the following test procedure:

1) The tester was leveled using the bubble level on front/top.

2) A square foot sample of media was obtained with the MD marked on it, ensuring the product has not been excessively handled or bent.

3) Three specimens were cut across the width that are 1" x 2" (25,4 mm x 51 mm) with 2" (51 mm) side being parallel to the MD. Mark samples "CD".

4) Three specimens were cut across the width that are 2" x 1" (51 mm x 25,4 mm) with 1" (25,4 mm) side being parallel to the MD. Mark samples "MD".

5) The tester was set up as follows:

| Parameter | Setting |
|---|---|
| Length (inches) | 1.0 (25,4 mm) |
| Width (inches) | 2.0 (51 mm) |
| Weight position (inches) | 4.0 (102 mm) |
| Weight (grams) | 200 |

6) The specimens were oriented in the Gurley holder with 2" (51 mm) side in jaws and fuzzy (AIR ENTERING) side facing right, with the sample positioned to the right.

7) The first arm movement always starts from right to left.

8) Once media was released from vane all movement was stopped.

9) Arm movement was started to left until media releases from vane.

10) The converter button was pushed and the record values were recorded.

11) The three tests were averaged for both MD and CD separately and the average of three for each was reported.Gurley stiffness was measured in milligrams. The stiffer the nonwoven, the higher the Gurley stiffness reading. A Gurley Bending Resistance Tester model 4171D available from Gurley Precision Instruments of Troy, NY was found suitable for the above testing.

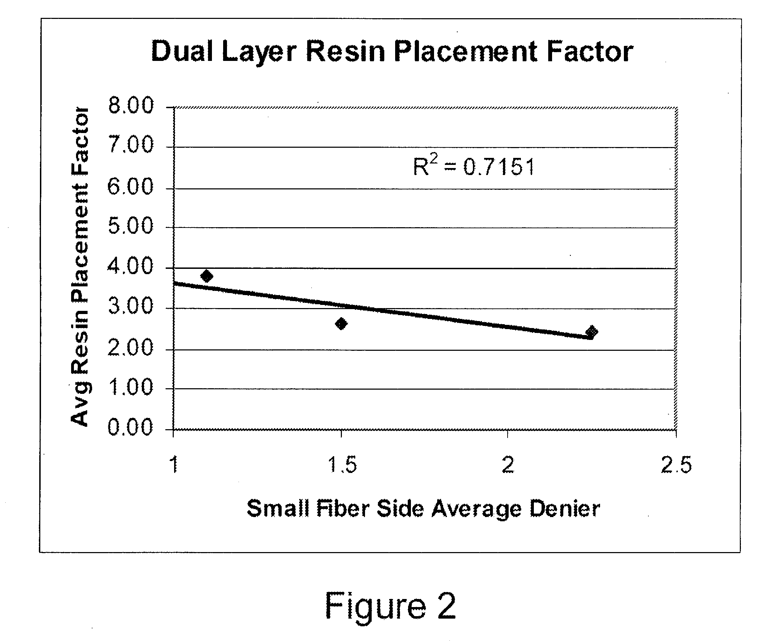

Figure 2 graphically illustrates the relationship between average fiber denier of the small fiber denier layer and average resin placement factor. A linear regression analysis between the average fiber denier of the low average denier layer (X axis) and the average resin placement factor (Y axis) indicates that "$R^2$" is 0.71. "$R^2$" results over 0.6 statistically indicate that changes in the average fiber denier of the average small denier layer cause corresponding and predictable changes in the average resin placement factor. As the average denier of the small fiber side goes up, the average resin placement factor goes down. Increasing the small fiber side's average denier increases the amount of relative resin on the larger fibers.

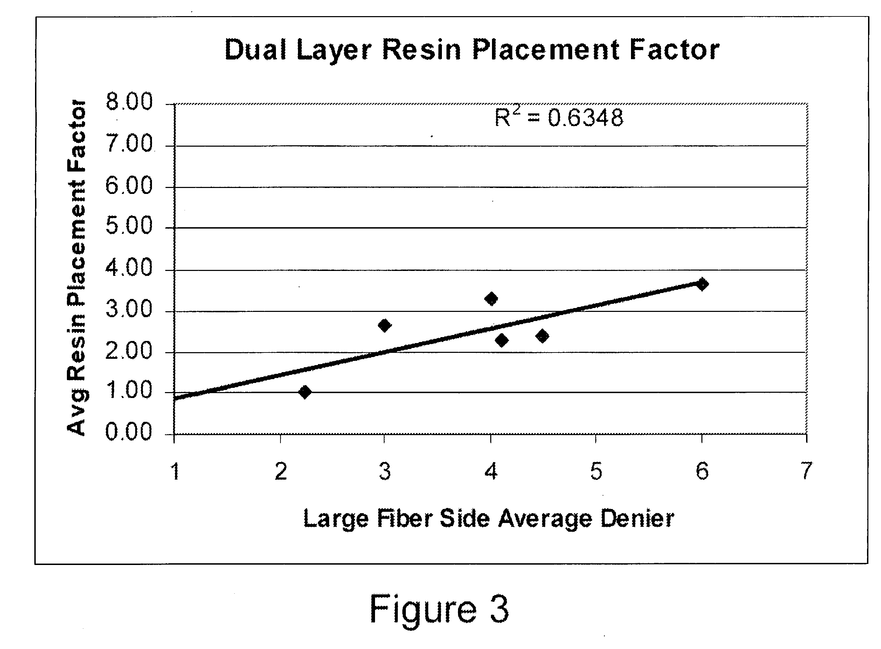

Figure 3 graphically illustrates the relationship between average fiber denier of the large fiber denier layer and average resin placement factor. A linear regression analysis between the average fiber denier of the average large denier layer (X axis) and the average resin placement factor (Y axis) indicates that "$R^2$" is 0.63. "$R^2$" results over 0.6 statistically indicate that changes in the average fiber denier of the large average denier layer cause corresponding and predictable changes in the resin placement factor. Increasing the large fiber side's average denier decreases the amount of relative resin on the larger fibers.

Thus, selection of fiber denier in the layers of a multilayer, composite nonwoven material can be used to control the resin placement factor and thereby control placement of the resin binder in that multilayer, composite nonwoven material.

It is understood that the use of an antimigrant in a resin mixture formulation can control resin placement in a nonwoven as evidenced by its use to improve color uniformity when a pigment is included in the mixture formulation. Thus when an antimigrant is used in the resin mixture formulation the resin would be expected to be evenly distributed between the two layers. Samples presented in 21 to 24 all had the same fiber blends. However, 22 and 23 had 2% volume to volume of antimigrant Sparassist HRS put in the mix where 21 and 24 did not. The resin placement factors were unchanged (22 and 23 = 2.29 & 2.28 respectively vs 21 and 23 = 2.11 & 2.57 respectively). Surprisingly, the control of the resin placement factor by fiber denier choice is stronger than the chemical effects of antimigrant addition.

It is understood that heat draws the liquid present in a nonwoven from side to side in the drying process when heat is applied alternately to the two surfaces. Thus if the heat could be controlled to provide more heat to the one side versus the other, the presence of resin should be higher on the higher heat side. Samples presented in 21 to 24 all had the same fiber blends. However, 21 and 22 had 40 degrees Fahrenheit (22 degrees Celsius) higher difference in heat in the initial heating cycle than did 23 and 24 while the resin placement factors were unchanged (21 and 22 = 2.11 & 2.29 respectively vs 23 and 24 = 2.28 & 2.51 respectively). Surprisingly, the control of the resin placement factor by fiber denier choice is stronger than the thermodynamic heating effects.

Polypropylene and polyester can have different types of finish present. Typically a polyester fiber will be coated with mineral oil, which is hydrophobic. Polypropylene can be used which has a hydrophilic finish on it. Thus it would be expected that the hydrophilic finish of the polypropylene would make the polypropylene preferentially wick the liquid resin toward the polypropylene only side, resulting in lower resin placement factors. Samples presented in 25 to 27 all contained polyester and polypropylene fibers, but only Sample 27 had polyester and polypropylene in both the small fiber side and the large fiber side. It is noted that 25 and 26 had polyester and polypropylene in the small fiber side but only polypropylene in the large fiber side. When 25 and 26 are included with the data that prepares the correlation in Figure 3 for large fiber side average denier versus average resin placement factor, the correlation is lost due to the presence of the polypropylene alone in the large fiber side. Surprisingly, the control of the resin placement factor by fiber denier choice is stronger than the hydrophobic effects of the polypropylene fiber.

While preferred embodiments have been set forth for purposes of illustration, the foregoing description should not be deemed a limitation of the disclosure herein. Accordingly, various modifications, adaptations and alternatives may occur to one skilled in the art without departing from the scope of the present disclosure.

| Table 3 | | | | | | | | |
|---|---|---|---|---|---|---|---|---|
| Sample | Air Entry Layer | Air Exit Layer | Single Layer | Weight oz/yd$^2$ (gsm) | Binder Resin pickup | E3[1] | dP inches of water$^2$ (Pascal) | DHC[2] |
| SAMPLE 1[4] | 33% 3 denier x 2" polyester | 33% 2.25 denier x 1.5' polyester | NA | 3(102) | 15% | 77.35% | 0.26(65) | 161.05 |
|  | 34% 6 denier x 2" polyester |  | NA |  |  |  |  |  |
|  |  |  |  |  |  |  |  |  |
| SAMPLE 3 | NA | NA | 33% 2.25 denier x 1.5" polyester | 4 (136) | 35% | 55.10% | 0.26(65) | 155.5 |
|  | NA | NA | 33% 3 denier x 2" polyester |  |  |  |  |  |
|  | NA | NA | 34% 6 denier x 2" polyester |  |  |  |  |  |
|  |  |  |  |  |  |  |  |  |
| SAMPLE 2[4] | NA | NA | 50% 3 denier x 2" polyester | 3(102) | 15% | 63.30% | 0.22 (55 | 135.95 |
|  | NA | NA | 50% 2.25 denier x 1.5" polyester |  |  |  |  |  |
| 1 E3 represents the average filtration efficiency of particle sizes from 3-10 microns according to the ASHRAE 52.2 test method. | | | | | | | | |
| 2 dP represents the initial resistance of the pleated filter. Testing was conducted at 2000 cfm per square foot (10.2 m$^3$/m$^2$/s. | | | | | | | | |
| 3 DHC represents the dust holding capacity of the fitter at the final pressure drop of 1.5" of water (374 Pa) according to ASHRAE 52.1. | | | | | | | | |
| 4 These media samples were co-pleated with a wire mesh. | | | | | | | | |

| Table 4 | | | | | | | |
|---|---|---|---|---|---|---|---|
| Sample | Air Exit Side Denier | Air Exit Side Avg Den | Air Entrance Side Denier | Air Entrance Side Avg Denier | Binder Formulation | Machine Setup | Nip - Squeezed or Gap setting |
| 10 | 2.25 | 2.25 | 50/503/6 | 4.5 | B | A | 0.015" |
| 11 | 1.5 | 1.5 | 50/503/6 | 4.5 | B | A | 0.015" |
| 12 | 1.5 | 1.5 | 6 | 6 | B | A | 0.015" |
| 13 | 1.5 | 1.5 | 6 | 6 | B | B | 0.020" |
| 14 | 1.5 | 1.5 | 6 (more) | 6 | A | C | 0.020" |

(continued)

| Table 4 | | | | | | | |
|---|---|---|---|---|---|---|---|
| Sample | Air Exit Side Denier | Air Exit Side Avg Den | Air Entrance Side Denier | Air Entrance Side Avg Denier | Binder Formulation | Machine Setup | Nip - Squeezed or Gap setting |
| 15 | 30/70 0.9/1.5 | 1.1 | 3 | 3 | A | A | Squeezed |
| 16 | 30/70 0.9/1.5 | 1.1 | 50/50 3/6 | 4.5 | A | A | Squeezed |
| 17 | 30/70 0.9/1.5 | 1.1 | 6 | 4.5 | A | A | Squeezed |
| 18 | 2.25 | 2.25 | 3 (high wt) | 3 | A | A | Squeezed |
| 19 | 2.25 | 2.25 | 3 (middle wt) | 3 | A | A | Squeezed |
| 20 | 2.25 | 2.25 | 3 (low wt) | 3 | A | A | Squeezed |
| 21 | 2.25 (Hi Temp Δ) | 2.25 | 50/50 2.25/6 | 4.1 | A | A | Squeezed |
| 22 | 2.25 (Hi Temp Δ) | 2.25 | 50/50 2.25/6 | 4.1 | A (A-migr) | A | Squeezed |
| 23 | 2.25 (Lo Temp Δ) | 2.25 | 50/50 2.25/6 | 4.1 | A (A-migr) | A | Squeezed |
| 24 | 2.25 (Lo Temp Δ) | 2.25 | 50/50 2.25/6 | 4.1 | A | A | Squeezed |
| 25 | 75/25 1.4 PET 0.9/PP3 | 1.4 | PP6 | 6 | A | A | 0.010" |
| 26 | 40/25/35 PP6/PP3/PET 0.9 | 3.5 | 65/35 PP6/PP3 | 5.0 | A | A | 0.010" |
| 27 | 50/35/15 PP6/PP3/PET 0. 9 | 4.1 | 50/30/20 PP6/PP3/PET 0.9 | 4.0 | A | A | 0.010" |

- The terminology "50/50 3/6" refers to a mixture of 50% 3 denier fibers and 50% 6 denier fibers.
- The terminology PP3 refers to 3 denier polypropylene fibers and PP6 refers to 6 denier polypropylene fibers
- In Sample 14 the air exit side fiber denier notation "more" indicates a higher amount of 6 denier present than in Sample 13.
- In Samples 21 and 22 and the steam pressure was reduced to the top five cans in the first horizontal steam section resulting in a difference in top to bottom steam can temperature of 70°F (39°C) degrees (top averaged 200°F (93°C) and bottom averaged 270°F (132°C)).
- In Samples 23 and 24 and the steam pressure was reduced to the top five cans in the first horizontal steam section resulting in a difference in top to bottom steam can temperature of 30°F (16°C) degrees (top averaged 260°F (127°C) and bottom averaged 290°F (143°C)).
- In Samples 22 and 23 "A-migr" indicates the addition of Sparassist HRS at 2% volume:volume ratio to the binder formulation.
- In machine setup column "A" describes a particular production setup while in Sample 13 setup B indicates more air was used in the foaming process to "dry" up the log and in Sample 14 setup C indicates a change of a higher feed roll setting but otherwise similar conditions
- The PET in Samples 25 to 27 represents polyethylene terephthalate fibers

**Table 5**

| Sample | Air Exit Layer Fiber Weight osy (gsm) | Air Exit Layer Extractables | Air Entrance Layer Fiber Weight, osy | Air Entrance Layer Extractables | Resin Placement Factor |
|---|---|---|---|---|---|
| 10 | 0.8 (27) | 52.7 | 1.6 (54) | 35.0 | 1.51 |
| 11 | 0.8 (27) | 53.6 | 1.6 (54) | 35.8 | 1.50 |
| 12 | 0.8 (27) | 55.4 | 1.6 (54) | 30.9 | 1.79 |
| 13 | 0.8 (27) | 40.1 | 1.6 (54) | 17.1 | 2.35 |
| 14 | 1.0 (34) | 33.4 | 2.0 (68) | 8.0 | 4.18 |
| 15 | 0.8 (27) | 32.4 | 1.6 (54) | 8.5 | 3.81 |
| 16 | 0.9 (31) | 32.5 | 1.8 (61) | 13.9 | 2.34 |
| 17 | 0.8 (27) | 30.0 | 1.6 (54) | 5.2 | 5.77 |
| 18 | 1.1 (37) | 27.5 | 2.2 (74) | 13.9 | 1.98 |
| 19 | 0.8 (27) | 27.5 | 1.6 (54) | 10.7 | 2.57 |
| 21 | 0.9 (31) | 23.8 | 1.8 (61) | 11.3 | 2.11 |
| 22 | 0.9 (31) | 26.6 | 1.8 (61) | 12.8 | 2.29 |
| 23 | 0.9 (31) | 26.5 | 1.8 (61) | 11.6 | 2.28 |
| 24 | 0.9 (31) | 25.6 | 1.8 (61) | 10.2 | 2.51 |
| 25 | 0.7 (24) | 2.8 | 1.4 (48) | 6.6 | 2.34 |
| 26 | 0.9 (31) | 3.9 | 1.8 (61) | 7.0 | 1.55 |
| 27 | 0.9 (31) | 4.0 | 1.8 (61) | 6.2 | 1.79 |

**Table 6**

| Sample | Basis Weight oz/sqft (gsm) | Thickness Inches (mm) | Frazier cfm/sq ft ($m^3/m^2/s$) | MD Gurley (mg) |
|---|---|---|---|---|
| 4 | 0.32 (98) | 0.03 (0,76) | 462 (2.35) | 319 |
| 5 | 0.32 (98) | 0.05 (1,3) | 539 (2.74) | 248 |
| 6 | 0.35 (107) | 0.07 (1,8) | 570 (2.90) | --- |
| 10 | 0.39(119) | 0.04 (1,0) | 360 (1.83) | 810 |
| 11 | 0.40 (122) | 0.06 (1,5) | 263 (1.34) | 821 |
| 12 | 0.41 (125) | 0.05 (1,3) | 256 (1.30) | 903 |
| 13 | 0.41 (125) | 0.05 (1,3) | 392 (1.99) | 704 |
| 14 | 0.39 (119) | 0.07 (1,8) | 457 (2.32) | --- |
| 15 | 0.30 (92) | 0.04 (1,0) | 399 (2.03) | --- |
| 16 | 0.34 (104) | 0.07 (1,8) | 357 (1.81) | --- |
| 17 | 0.31 (95) | 0.06 (1,5) | 415 (2.11) | --- |
| 18 | 0.40 (122) | 0.07 (1,8) | 400 (2.03) | --- |
| 20 | 0.15 (46) | 0.03 (0,76) | 818 (4.16) | --- |
| 21 | 0.31 (95) | 0.08 (2,0) | 582 (2.96) | --- |
| 22 | 0.33 (101) | 0.08 (2,0) | 545 (2.77) | --- |

(continued)

| Sample | Basis Weight oz/sqft (gsm) | Thickness Inches (mm) | Frazier cfm/sq ft ($m^3/m^2/s$) | MD Gurley (mg) |
|---|---|---|---|---|
| 23 | 0.32 (98) | 0.08 (2,0) | 545 (2.77) | --- |
| 24 | 0.32 (98) | 0.08 (2,0) | 552 (2.80) | --- |
| 25 | 0.27 (82) | 0.10 (2,5) | 528 (2.68) | --- |
| 26 | 0.34 (104) | 0.06 (1,5) | 520 (2.64) | --- |
| 27 | 0.33 (101) | 0.08 (2,0) | 500 (2.54) | --- |

**Table 7**

| Sample | Specimen Basis Weight oz/sq ft (gsm) | Specimen Thickness Inches (mm) | Specimen Frazier cfm/sq ft ($m^3/m^2/s$) | 110 fpm dP[1], "WG" (Pascal) | 110 fpm 3.10 micron PFE, % | Estimated MERV |
|---|---|---|---|---|---|---|
| 6 | 0.48 (146) | 0.07 (1.8) | 591 (3.00) | 0.065 (16.2) | 49.0 | 6 |
| 10 | 0.38 (116) | 0.04 (1.0) | 357 (1.81) | 0.129 (32.1) | 48.4 | 6 |
| 4 | 0.31 (95) | 0.03 (0.76) | 468 (2.38) | 0.105 (26.2) | 59.9 | 7 |
| 11 | 0.43 (131) | 0.06(1.5) | 259 (1.32) | 0.212 (52.8) | 65.0 | 7 |
| 12 | 0.32 (98) | 0.05 (1.3) | 530 (2.70) | 0.078 (19.4) | 54.7 | 7 |
| 13 | 0.40 (122) | 0.06(1.5) | 406 (2.07) | 0.125 (31.1) | 55.7 | 7 |
| 14 | 0.39 (119) | 0.08 (2.0) | 464 (2.36) | 0.099 (24.7) | 62.9 | 7 |
| 15 | 0.30 (92) | 0.07 (1.8) | 554 (2.82) | 0.130 (32.4) | 62.8 | 7 |
| 16 | 0.29 (88) | 0.04 (1.0) | 393 (2.00) | 0.123 (30.6) | 62.3 | 7 |
| 17 | 0.40 (122) | 0.08 (2.0) | 406 (2.07) | 0.114 (28.4) | 66.0 | 7 |
| 20 | 0.15 (46) | 0.03 (0.76) | 818 (4.16) | 0.035 (8.7) | 31.2 | 5 |
| 21 | 0.30 (92) | 0.08 (2.0) | 607 (3.09) | 0.062 (15.4) | 50.2 | 7 |
| 22 | 0.34 (104) | 0.09 (2.3) | 541 (2.75) | 0.076 (18.9) | 59.3 | 7 |
| 23 | 0.32 (98) | 0.08(2.0) | 541 (2.75) | 0.078 (19.4) | 53.7 | 7 |
| 24 | 0.30 (92) | 0.07 (1.8) | 554 (2.82) | 0.074 (18.4) | 56.6 | 7 |
| 25 | 0.26 (79) | 0.10 (2.5) | 525 (2.67) | 0.093 (23.2) | 46.6 | 6 |
| 26 | 0.35 (107) | 0.07 (1.8) | 515 (2.62) | 0.085 (21.2) | 53.4 | 7 |
| 27 | 0.33 (101) | 0.08 (2.0) | 495 (2.52) | 0.087 (21.7) | 53.3 | 7 |

[1] Pressure drop measurements were performed at 110 feet per minute (0,56 m/s) media air speed.

## Claims

1. A method of manufacturing a composite nonwoven filtration material comprising subsequent steps of:

   providing a first plurality of staple length fibers having an average denier in the range of about 2.0 to about 6.5;
   forming the first plurality of fibers into a first nonwoven web ;
   providing a second plurality of staple length fibers having an average denier in the range of about 0.9 to about 4.5;
   forming the second plurality of fibers into a second nonwoven web ;
   overlying the first and second nonwoven webs;
   applying resin to the overlying webs ;

drying the resin to bond both the fibers within the first and the second webs and the overlaid webs to form the composite nonwoven material having a resin placement factor of about 1.1 to about 10.

2. The method of claim 1, wherein the first plurality of fibers is fed into a first card to form the first web and the second plurality of fibers are fed into a second card to form the second web.

3. The method of claim 1 or 2, wherein the overlying webs are heated after the resin is applied.

4. The method of any one of claims 1 to 3, wherein the resin is applied in liquid or foam form to the overlying webs adjacent an entry nip.

5. The method of any of claims 1 to 3, wherein a entry nip is formed by two rolls, a grooved steel roll and a filled rubber roll.

6. The method of any one of claims 1 to 3, wherein the resin is applied to the overlying webs in liquid or foam form.

7. The method of any one of claims 1 to 5, wherein the resin binder is applied to the overlaid webs and penetrates the webs as they pass through a closed nip .

8. The method of any one of claims 1 to 3, wherein the resin is applied to the overlying webs in liquid or foam form and the material has a resin placement factor of about 1.5 to about 6 after drying.

9. The method of any one of claims 1 to 7, wherein the fibers of the first and second pluralities are synthetic polymer fibers.

10. The method of any one of claims 1 to 8 further comprising predetermining a resin placement factor for the two-layer, composite nonwoven material before providing a first plurality of staple length fibers, wherein the denier of the first plurality of fibers and the denier of the second plurality of fibers are selected to achieve the predetermined resin placement factor.

11. The method of any one of claims 1 to 9, wherein the average fiber denier of the first plurality of staple length fibers is at least 10% greater than the average fiber denier of the second plurality of staple length fibers.

12. The method according to any one of claims 1 to 10, wherein the resin is at least partially dried using heated rollers and the temperature difference between adjacent heated rollers is between 30 and 70 degrees Fahrenheit (16, 7 - 38, 9 degrees Celsius) providing for higher temperatures on the side having larger average denier fibers.

13. The method according to any one of claims 1 to 11, wherein the resin contains an antimigrant.

14. The method according to any one of claims 1 to 12, wherein at least one of the first nonwoven web and the second nonwoven web are prepared by one of air-laying, liquid-laying and foam-laying.

**Patentansprüche**

1. Verfahren zur Herstellung eines Verbundvliesstoff-Filtermaterials, das folgende Schritte umfasst:

Bereitstellen einer ersten Vielzahl von Stapelfasern, die ein mittleres Denier im Bereich von ungefähr 2.0 bis ungefähr 6.5 aufweisen;
Formen der ersten Vielzahl von Fasern zu einer ersten Vliesstoffbahn;
Bereitstellen einer zweiten Vielzahl von Stapelfasern, die ein mittleres Denier im Bereich von ungefähr 0.9 bis ungefähr 4.5 aufweisen;
Formen der zweiten Vielzahl von Fasern zu einer zweiten Vliesstoffbahn;
Überlagerung der ersten und zweiten Vliesstoffbahn;
Auftragen von Harz auf die überlagerten Bahnen;
Trocknen des Harzes, um die Fasern sowohl innerhalb der ersten als auch der zweiten Bahn und der überlagerten Bahnen zu binden, um das Verbundvliesstoffmaterial mit einem Harz-Auftragungsfaktor von ungefähr 1.1 bis ungefähr 10 zu bilden.

2. Verfahren nach Patentanspruch 1, wobei die erste Vielzahl von Fasern einer ersten Kardätsche zugeführt wird, um die erste Bahn zu bilden, und die zweite Vielzahl von Fasern einer zweiten Kardätsche zugeführt wird, um die zweite Bahn zu bilden.

3. Verfahren nach Patentanspruch 1 oder 2, wobei die überlagerten Bahnen nach dem Auftragen des Harzes erwärmt werden.

4. Verfahren nach einem der Patentansprüche 1 bis 3, wobei das Harz in Flüssigkeits- oder Schaumform auf die überlagerten Bahnen neben einem Eintrittswalzenspalt aufgetragen wird.

5. Verfahren nach einem der Patentansprüche 1 bis 3, wobei ein Eintrittswalzenspalt von zwei Walzen gebildet wird, einer geriffelten Stahlwalze und einer gefüllten Gummiwalze.

6. Verfahren nach einem der Patentansprüche 1 bis 3, wobei das Harz auf die überlagerten Bahnen in Flüssigkeits- oder Schaumform aufgetragen wird.

7. Verfahren nach einem der Patentansprüche 1 bis 5, wobei das HarzBindemittel auf die überlagerten Bahnen beim Passieren eines geschlossenen Walzenspalts aufgetragen wird und in sie eindringt.

8. Verfahren nach einem der Patentansprüche 1 bis 3, wobei das Harz in Flüssigkeits- oder Schaumform auf die überlagerten Bahnen aufgetragen wird und das Material einen Harz-Auftragungsfaktor von 1.5 bis ungefähr 6 aufweist.

9. Verfahren nach einem der Patentansprüche 1 bis 7, wobei die Fasern der ersten und zweiten Vielzahl synthetische Polymerfasern sind.

10. Verfahren nach einem der Patentansprüche 1 bis 8, umfassend des Weiteren das Vorherbestimmen eines Harz-Auftragungsfaktors für die zweilagige Verbundvliesstoffmaterial, bevor eine erste Vielzahl von Stapelfasern bereitgestellt wird, wobei das Denier der ersten Vielzahl von Fasern und das Denier der zweiten Vielzahl von Fasern so ausgewählt sind, dass der vorherbestimmte Harz-Auftragungsfaktor erreicht wird.

11. Verfahren nach einem der Patentansprüche 1 bis 9, wobei das mittlere Faserdenier der Vielzahl von Stapelfasern zumindest 10 % größer ist als das mittlere Faserdenier der zweiten Vielzahl von Stapelfasern.

12. Verfahren nach einem der Patentansprüche 1 bis 10, wobei das Harz zumindest teilweise bei Benutzung von erwärmten Walzen getrocknet wird, und die Temperaturdifferenz zwischen den benachbarten erwärmten Walzen zwischen 30 und 70 Grad Fahrenheit (16, 7-38, 9 Grad Celsius) ist, was höhere Temperaturen auf Seite der Fasern mit dem größeren mittleren Denier ergibt.

13. Verfahren nach einem der Patentansprüche 1 bis 11, wobei das Harz ein Antimigrant enthält.

14. Verfahren nach einem der Patentansprüche 1 bis 12, wobei zumindest eine von der ersten Vliesstoffbahn und der zweiten Vliesstoffbahn durch eines von Luftlegen, Flüssigkeitslegen und Schaumlegen vorbereitet wird.

**Revendications**

1. Procédé de fabrication d'un matériau de filtration non tissé composite comprenant les étapes suivantes consistant à :

fournir une première pluralité de fibres de longueur discontinue ayant un denier moyen dans la plage d'environ 2,0 à environ 6,5 ;
former la première pluralité de fibres en une première toile non tissée ;
fournir une seconde pluralité de fibres de longueur discontinue ayant un denier moyen dans la plage d'environ 0,9 à environ 4,5 ;
former la seconde pluralité de fibres en une seconde toile non tissée ;
superposer les première et seconde toiles non tissées ;
appliquer de la résine sur les toiles superposées ;
sécher la résine pour lier à la fois les fibres se trouvant dans les première et seconde toiles et les toiles superposées pour former le matériau non tissé composite ayant un facteur de placement de résine d'environ 1,1 à environ 10.

2.  Procédé selon la revendication 1, dans lequel la première pluralité de fibres sont alimentées dans une première carde pour former la première toile et la seconde pluralité de fibres sont alimentées dans une seconde carde pour former la seconde toile.

3.  Procédé selon la revendication 1 ou 2, dans lequel les toiles superposées sont chauffées après que la résine ait été appliquée.

4.  Procédé selon l'une quelconque des revendications 1 à 3, dans lequel la résine est appliquée sous une forme liquide ou une forme de mousse sur les toiles superposées adjacentes à une pince d'entrée.

5.  Procédé selon l'une quelconque des revendications 1 à 3, dans lequel une pince d'entrée est formée par deux rouleaux, un rouleau d'acier rainuré et un rouleau de caoutchouc en fibres compressées.

6.  Procédé selon l'une quelconque des revendications 1 à 3, dans lequel la résine est appliquée sur les toiles superposées sous une forme liquide ou une forme de mousse.

7.  Procédé selon l'une quelconque des revendications 1 à 5, dans lequel le liant résine est appliqué sur les toiles superposées et pénètre dans les toiles lorsqu'elles passent à travers une pince fermée.

8.  Procédé selon l'une quelconque des revendications 1 à 3, dans lequel la résine est appliquée sur les toiles superposées sous une forme liquide ou une forme de mousse et le matériau a un facteur de placement de résine d'environ 1,5 à environ 6 après séchage.

9.  Procédé selon l'une quelconque des revendications 1 à 7, dans lequel les fibres des première et seconde pluralités sont des fibres polymères synthétiques.

10. Procédé selon l'une quelconque des revendications 1 à 8, comprenant en outre l'étape consistant à prédéterminer un facteur de placement de résine pour le matériau non tissé composite en deux couches avant de fournir une première pluralité de fibres de longueur discontinue, le denier de la première pluralité de fibres et le denier de la seconde pluralité de fibres étant sélectionnés pour parvenir au facteur de placement de résine prédéterminé.

11. Procédé selon l'une quelconque des revendications 1 à 9, dans lequel le denier de fibre moyen de la première pluralité de fibres de longueur discontinue est au moins 10 % supérieur au denier de fibre moyen de la seconde pluralité de fibres de longueur discontinue.

12. Procédé selon l'une quelconque des revendications 1 à 10, dans lequel la résine est au moins partiellement séchée en utilisant des rouleaux chauffés et la différence de température entre des rouleaux chauffés adjacents est comprise entre 16,7 et 38,9°C (30 à 70°F), ce qui fournit des températures supérieures sur le côté ayant des fibres d'un denier moyen supérieur.

13. Procédé selon l'une quelconque des revendications 1 à 11, dans lequel la résine contient un agent antimigrant.

14. Procédé selon l'une quelconque des revendications 1 à 12, dans lequel au moins une parmi la première toile non tissée et la seconde toile non tissée sont préparées par un procédé parmi une formation par voie sèche, une formation par voie humide et une formation par voie mousse.

Figure 1

Figure 2

Figure 3

EP 2 117 825 B1

**EP 2 117 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6315805 B
- US 6966939 B
- US 6669761 B